# EUROPEAN PATENT APPLICATION

(11) **EP 2 282 049 A1**
(43) Date of publication of application: **09.02.2011**
(21) Application number: 09166975.4
(22) Date of filing: 31.07.2009
(51) Int. Cl.: F03B 13/18, F03B 13/20, F03B 17/00, F03G 7/08

(54) **Rotating wave energy capture system and method**

(71) Applicant: Molloy, Padraig, Co. Galway (IE)
(72) Inventor: Molloy, Padraig, Co. Galway (IE)
(74) Representative: Lucey, Michael

(57) **Abstract**

The present invention relates to an energy system, suitable for converting wave energy of a body of water into movement of a drive train to capture energy, said system comprising a vessel, sitting on said body of water, having a hull adapted to rotate freely through 360° in response to said wave energy. A sequence of valveless channels and interconnected reservoirs mounted within and/or on the hull adapted for water flow and positioned to convert the wave energy acting on the hull to provide a rotation of the hull, preferably continuous rotation, wherein the interconnected series of valveless reservoirs are dimensioned to ensure water can flow from each reservoir to a neighbouring reservoir via a channel in one direction only. An advantage of the invention is that the displacement of water in the vessel using the sequence of channels and reservoirs changes the centre of gravity of the vessel, such that the centre of gravity is changed in a desired direction to cause rotation of the vessel.

## Description

### Field of the Invention

The invention relates to a valve-less system suitable for converting wave energy in a body of water into rotation of a wave-energy capture vessel/device, and thereby driving a shaft with a harvestable power output.

In particular, the invention relates to a power generation vessel suitable for converting wave energy into the rotation of a shaft with an associated torque and speed to power a drive train to generate/capture energy.

### Background to the Invention

Unidirectional rotational output from a wave energy conversion device to generate power is desirable. Typically such devices output power in a reciprocating format and this output must be rectified either mechanically, hydraulically, pneumatically or electrically. The presence of valves in a wave energy device is a very significant design flaw and problem in the area of wave energy devices as their access and maintenance is difficult, especially in a harsh environment such as in the open sea or ocean.

There is therefore a need to provide a power generation vessel and method suitable for converting wave energy into a unidirectional rotational output suitable to drive a power generation system.

### Summary of the Invention

According to the invention there is provided, as set out in the appended claims, an energy system, suitable for converting wave energy of a body of water into movement of a drive train to capture energy, said system comprising:
a vessel, sitting on said body of water, having a hull adapted to rotate freely through 360° in response to said wave energy;
a sequence of valveless channels and interconnected reservoirs mounted within and/or on the hull adapted for water flow and positioned to convert the wave energy acting on the hull to provide a rotation of the hull, preferably continuous rotation; and
wherein the interconnected series of valveless reservoirs are dimensioned to ensure water can flow from each reservoir to a neighbouring reservoir via a channel is provided in one direction only.

An advantage of the invention is that the displacement of water in the vessel changes the centre of gravity of the vessel, such that the centre of gravity is changed in a desired direction to cause rotation of the vessel.

An additional and separate system of reservoirs that can fill and drain through the vessels external hull as the vessel/device rolls can be optionally included to accentuate vessel rotation in one direction only through liquid capture and release designed to increase roll in one direction and diminish roll in the opposing direction.

The vessel's primary drive system hull is designed such that water or another medium is enclosed within the hull in a continuous duct and reservoir system that runs within the outer skin of the cylindrically-hulled vessel.

The design of the present invention provides a rotational output which will be unidirectional and intermittent. A very significant element of the design is that the device can be operated in a functional format with no valves and minimal moving parts.

As the vessel sits on the body of water waves passing underneath cause it to roll from side to side. This movement causes the water enclosed within the vessel to slosh and flow within the duct and reservoir system. Water flows from one reservoir to the next in one direction only and is restricted by reservoir geometry from returning. As can be seen on each roll of the vessel the water flows from reservoir to reservoir, entering each reservoir at the top and exiting at the bottom. The reservoir design ensures that no valves are required for operation. As water flows on this circular path this impacts on the vessels stability as the vessel's centre of mass is continuously and incrementally moved in an orbital fashion within the vessel. In order to accommodate or balance the continuously shifting mass of the enclosed water the vessel reorients itself by rolling or capsizing repeatedly in the same direction as that taken by the flow of internal water.

The energy released by the vessels motion can be captured from the relative motion between the hull and vessel's central shaft. This can be achieved via an internal drive train resisted by the mooring system or by a counterweighted or suspended mass attached to the vessel's central shaft.

The invention does not require the use any valves whatsoever in order to generate a rotation of the vessel. The inventive nature of the uni-directional flow and entrapment of the liquid/water by a series of ducts and reservoirs means that no valves are necessary. Liquid/water is entrapped at each increment of roll. Design of duct angle and reservoir geometry is such as to transfer water between reservoirs during normal wave-induced rolling to a designed angle of heel. Water flows through a duct/conduit/channel as the vessel heels/rolls and enters the top of the adjacent down-stream reservoir for that increment of hull rotation. If too few reservoirs are utilised then water will not flow as duct angle relative to the roll angle will be too large. Water cannot flow back due to the geometry of each reservoir ensuring its entrapment and release in the forward direction of roll only.

In one embodiment, as the vessels heels, water flows from reservoir to reservoir in one direction only connected by at least one of said plurality of channels, said water entering each reservoir at the top and exiting at the bottom.

In one embodiment water, once having entered a reservoir, cannot flow back but will be retained until angle of heel is such that it flows forward to the next reservoir in the downstream or desired flow direction.

Ideally the invention provides a mooring system suitable for connecting the vessel with an anchor, the mooring system potentially adapted to provide a resistance to the central shaft and allowing power to be harvested from the vessels rotating hull.

In a preferred embodiment of the invention, the system comprises an anchor which is suitably fixed with respect to the vessel but allowing the vessel to roll and rotate freely. Typically, the anchor comprises a riser fixed to the sea bed and then split so as to secure both ends of the central shaft which can rotate with respect to the hull. In the embodiment where the drive is achieved between shaft and rotating hull then the shaft will be restrained by a fixed or non-rotating joint between riser and shaft. In the embodiment where a suspended mass is used to achieve a drive then the mooring system tethers the vessel to the anchor about two pivot or clevis type attachments located on each end of the hull where the central shaft protrudes from the hull.

In one embodiment, the mooring system is adapted to bias the hull of the vessel into an orientation where it is beam-on to the direction of the wind and/or wave and/or optimal orientation, depending on the conditions.

Ideally, the hull shape is cylindrical with minimal protrusions that will cause viscous or inertia drag and thereby reduce the amount of energy that can be harvested from the hull's rotational motion. However, other designs of hull which optimises the performance of the rolling and rotational motion of the hull/vessel may be considered.

In a particularly preferred embodiment, the invention provides a system for converting wave energy into a shaft rotating with an associated torque and angular velocity and thence into electricity as the water's potential energy is recovered. The flow is converted to a mechanical output by conventional means and hence used to drive an electricity generator operatively connected to the drive train. Typically, the system includes electrical power transmission means for transmitting electrical power from the vessel.

The invention also relates to a vessel suitable for forming part of the power generation system of the invention and comprising a vessel having a hull shaped to roll and rotate freely through 360° or full capsize in response to the action of the waves.

In a further embodiment there is provided an energy system suitable for converting wave energy of a body of water into movement of a drive train to capture energy comprising: a vessel, sitting on said body of water, having a hull adapted to roll and rotate freely in response to said wave energy; and at least one or more channels/ducts and reservoirs mounted within and/or on the hull that are positioned to convert the rolling motion of the hull to uni-directional flow of water within the hull, displacing the vessels COG (centre-of-gravity) and causing the vessel rotate incrementally through 360°.

In another embodiment an additional and separate system of reservoirs that can fill and drain through the vessels external hull as the vessel/device rolls/capsizes can be optionally included to accentuate vessel rotation in one direction only through liquid capture and release designed to increase roll in one direction and diminish roll in the opposing direction.

In another embodiment there is provided a method for converting wave energy of a body of water into movement of a drive train to generate energy comprising:
adapting a vessel, sitting on said body of water, having a hull to roll freely and invert/capsize or otherwise rotate through 360° in response to said wave energy; and
positioning a continuous circuit or system of ducts and channels that allows water entrapped within the hull one-way flow within the hull thereby causing a re-distribution of mass within the hull as it rolls in response to wave input, thereby moving the vessel's centre of mass and causing the vessel to rotate in the water.

### Brief Description of the Drawings

The invention will be more clearly understood from the following description of some embodiment thereof, given by way of example only, with reference to the accompanying figures in which:
Figure 1 illustrates an isometric projection of the hull and mooring system.
Figure 2 illustrates a transverse section of a wave energy conversion vessel of the present invention.
Figure 3 illustrates a transverse section of a wave energy conversion vessel of the present invention.
Figure 4 illustrates a transverse section of the external hull reservoirs of a wave energy conversion vessel of the present invention.
Figure 5 illustrates transverse section detail of the external hull reservoirs of a wave energy conversion vessel of the present invention.
Figure 6 illustrates transverse section detail of the external hull reservoirs of a wave energy conversion vessel according to another aspect of the present invention.
Figure 7 illustrates transverse section detail of the external hull reservoirs of a wave energy conversion vessel according to another aspect of the present invention.
Figure 8 illustrates a transverse section side view of a power capture system according to the invention.
Figure 9 illustrates another transverse section side view of a power capture system according to the invention.

### Detailed Description of the Drawings

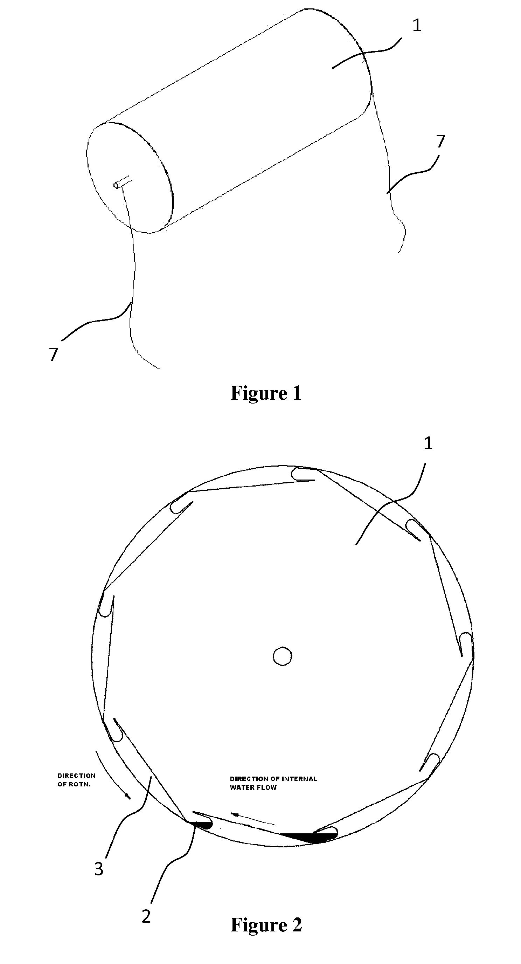

A system for the conversion of wave (and optionally wind energy) to electrical power is illustrated in attached Figures 1 to 5 according to the invention.

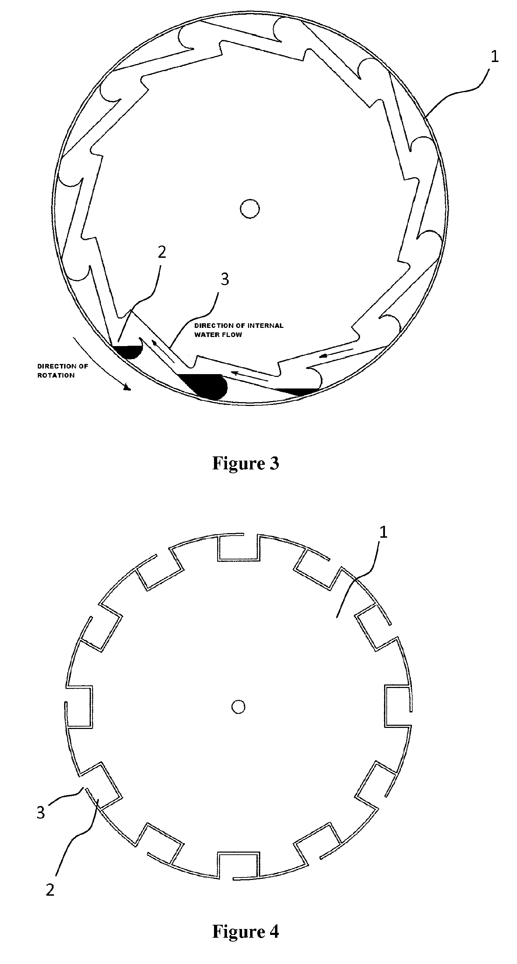

As shown in Figures 1 there is provided a hull (1) cylindrical in shape and free to rotate around a shaft mounted on the hulls axis of longitudinal symmetry. A mooring system (7) is attached to this shaft using a rotatable one-degree of freedom joint or mooring system and shaft are integral depending on the power harvesting system utilised. As shown in Figures 2 and 3 a specific volume of water is entrapped within the hull and this water can flow with the duct/channel and reservoir system shown. The volume of water internally is a percentage of the total interior volume of the hull and this may be modified in order to alter the vessels response to wave energy inputs.

The flow path for the water within the hull is preferably a continuous sequence or loop of ducts/ channels (3) connected to reservoirs (2), as shown by the arrows in Figures 2 and 3. Unidirectional flow only is possible with water entering each reservoir (2) from above and flowing out from the bottom. Flow occurs due to the heeling or rolling of the vessel under the action of waves. The volume of water moving around inside the vessel alters the position of the vessel's centre-of-gravity and the vessel according rotates in the water to rebalance itself.

The mechanism used to capture the vessels rotation and convert it to a usable energy format typically either electrical, mechanical or hydraulic and may be of two types, describe in more detail below. In one embodiment the vessel rotates the hull relative to the main shaft and the main shaft is integrally connected (no rotational movement possible) with the mooring tethers. A drive train between hull and shaft can then be used to convert the rotational energy of the hull. In another embodiment the main shaft rotates relative to the mooring tethers and is integral with the hull. In this case a counterweighted, suspended or other system is used within the hull where its mass is sufficient to resist system output loads.

It will be appreciated that an important aspect of the invention ensures that the system requires no valves or moving mechanical parts due to dimension and action of the sequence of ducts/channels (3) and reservoirs (2).

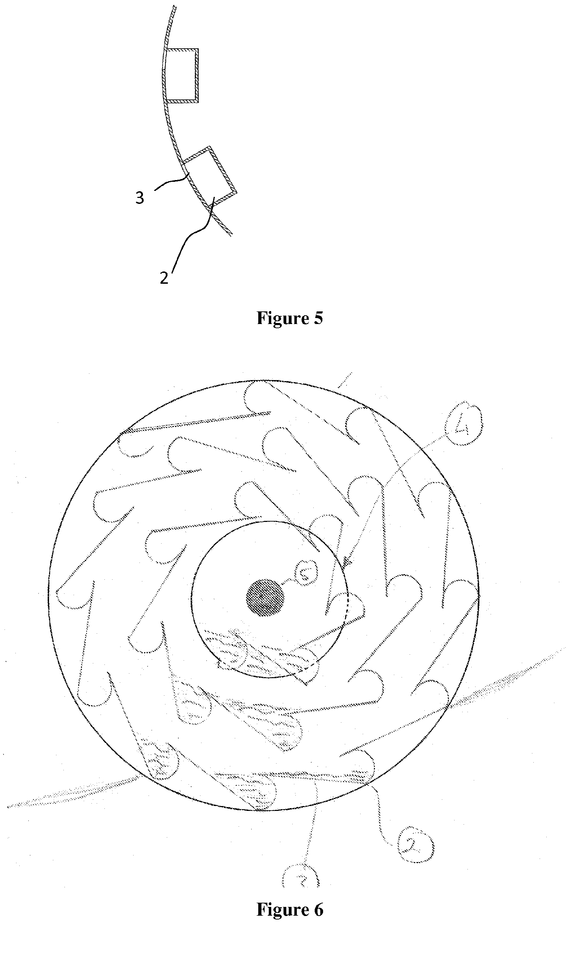

An additional feature which may be added is shown in Figures 4 and 5, illustrating an alternative embodiment of the invention. This series of ducts/channels (3) and reservoirs (2) open out through the hull but are internally sealed so that water cannot enter the vessels inner zone through them. Each reservoir (2) is designed so that when the vessel rolls under wave action in one direction water is entrapped thereby unbalancing the hull in one direction of roll only and accentuating or amplifying the rotational motion of the vessel. When the vessel rotates this water is poured or released from the vessel. It will be appreciated that the invention can operate using a combination of the embodiments shown in Figures 2 to 5.

The device/vessel is designed to lie abeam of the seas and at right angles to the prevailing wind. The attachment points for the vessels mooring system are located on the vessels longitudinal axis or axis of rotation and the anchor system is secured to the vessel main shaft at these points. The invention is designed such that internal fixed and moving masses (liquids) within the hull are such that stability is low and the vessel rolls significantly in response to wave action

It will be appreciated that in the context of the present invention that the terms channel and duct should be afforded the widest possible interpretation, so long as the channel or duct conveys the water to facilitate displacement of water such that the centre for gravity of the vessel is displaced in a desired direction to cause rotation of the vessel. Moreover it is envisaged that the invention will operate with any type of fluid and the term water used in the description and claims should be interpreted broadly as to mean any body of fluid.

It will be further appreciated that the channels or ducts are designed to be of an angle of inclination relative to the hull and length to allow for optimal displacement of water as the vessel rolls. Typically the channel or duct of the present invention can be of any shape or dimension.

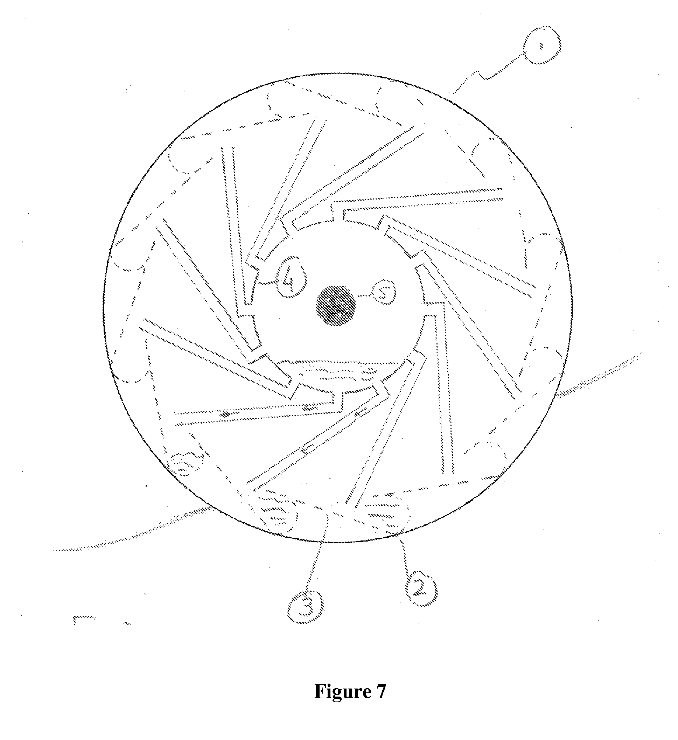

Referring now to Figures 6 and 7 illustrates an alternative embodiment of the present invention. In this embodiment a similar reservoir/duct system to previously exists but the sequence of channels (3) and reservoirs (2) spirals inward and elevates water to a central reservoir (4). Flow out from this central reservoir (4) can be either channelled through turbine(s) for energy capture or, as shown, can be channelled back to the lower levels of the duct/reservoir system so as to shift hull/device/vessel centre-of-gravity in a direction that will enhance rotation. Figures 6 and 7 shows how to convert vessel rotation to water elevation energy capture system for purposes of enhancing rotation through centre-of-gravity displacement and/or energy conversion via turbine(s) (not shown) on exit ducts from a central or elevated reservoir.

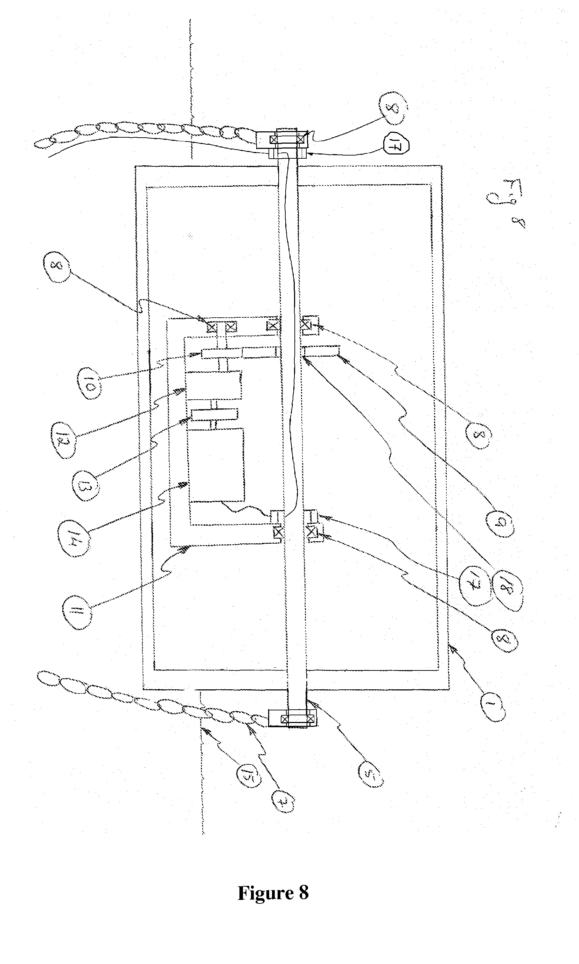

In the embodiment shown in Figure 8 the main shaft (5) is fixed to or integral with the hull. As the hull rotates the shaft also rotates in the bearings (8) as shown with respect to the mooring system (7). Suspended from the main shaft (5) and free to rotate with respect to the shaft is shown the power capture system enclosure (11). The mass of this enclosure and its elements is such as to resist the drive system reaction torques as generated by the main shaft gear (9) acting on drive system input gear (10). The maximum torque that can be input to the power capture system is therefore dependent on the moment that can be generated by the mass of the power capture system and enclosure. The main shaft (5) can drive gear (9) via a ratchet or sprag clutch type device (18) if unidirectional rotation of the system is required. A second power capture system with a reverse direction of rotation could also be included in the design such that hull rotation and oscillation in both directions of roll can be captured. Alternatively a second main shaft input gear could input simultaneously to the power capture system via an intermediary idler gear such that two inputs with the same rotational direction feed into the power capture drive train. A number of other possible drive train options exist also and would be apparent to a person skilled in the art. The gearbox (12) is linked to the generator (14) via an energy storage device such as a flywheel (13) which can also be incorporated in the drive train to stabilise and smooth power system output. The electrical output from the generator can be fed from the device via a system of two commutators (17) mounted on the main shaft.

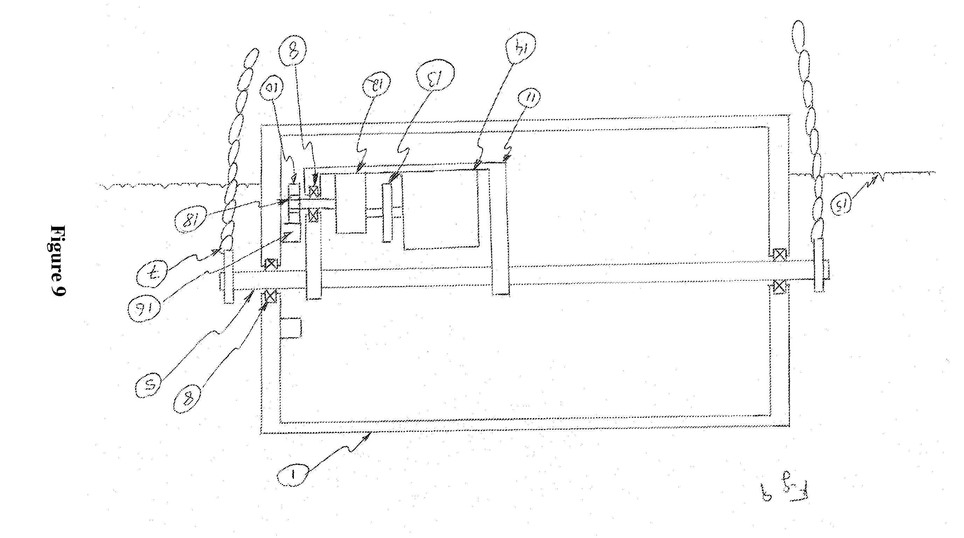

Another power capture embodiment is shown in Figure 9. In this schematic the main shaft (5) is in fact an axle and is integral with the mooring system and the hull rotates about it on bearings (8), as shown. Mounted on the devices inner hull (1) and concentric with main shaft is a gear (16) which drives the power capture input gear (10). The power capture system enclosure (11) is mounted on the main shaft (5), or axle in this case, and is integral with or fixed to it. As the hull rotates the power capture system is driven via the input gear (10) and the unidirectional rachet or sprag-clutch mechanism (18). The drive train again includes a gearbox (12) and flywheel (13) connecting to the generator (14). Commutators are not required to feed the electrical output from the device as the enclosure (11), shaft (5) and mooring system (7) are integral. It will be appreciated that in the functional schematics of the power capture embodiments shown in Figures 8 and Figure 9 the elements are not to scale or in proportion to hull dimension.

These two embodiments are not the exclusive means by which energy can be converted and harvested from the device. In both devices the main shaft/axle (5) need not necessarily be continuous and a system of half-shafts could be used also and are described for illustration purposes. The use of alternate drive systems, including the use of hydraulics, is possible and will be apparent to the skilled person.

While the invention has been described herein with reference to several especially preferred embodiments, these embodiments have been presented by way of example only, and not to limit the scope of the invention. Additional embodiments thereof will be obvious to those skilled in the art having the benefit of this detailed description, especially to meet specific requirements or conditions. Further modifications are also possible in alternative embodiments without departing from the inventive concept.

The invention is not limited to the embodiments hereinbefore described but may be varied in both construction and detail.

## Claims

1. An energy system, suitable for converting wave energy of a body of water into movement of a drive train to capture energy, said system comprising:
a vessel, sitting on said body of water, having a hull adapted to rotate freely through 360° in response to said wave energy;
a sequence of valveless channels and interconnected reservoirs mounted within and/or on the hull adapted for water flow and positioned to convert the wave energy acting on the hull to provide a rotation of the hull, preferably continuous rotation; and
wherein the interconnected series of valveless reservoirs are dimensioned to ensure water can flow from each reservoir to a neighbouring reservoir via a channel is provided in one direction only.

2. The energy system as claimed in claim 1 wherein displacement of water in the vessel between reservoirs changes the centre of gravity of the vessel, such that the centre of gravity is changed in a desired direction to cause rotation of the vessel.

3. The energy system as claimed in claims 1 or 2 wherein, as the vessels rolls/rotates, water flows from reservoir to reservoir connected by at least one of said plurality of channels, said water entering each reservoir at the top from a channel and exiting at the bottom of the reservoir to the next channel.

4. The energy system as claimed in any preceding claim wherein the continuous rotation of the hull drives a shaft to apply energy to said drive train to capture said energy.

5. The energy system as claimed in any preceding claim wherein the vessel is substantially cylindrical shaped.

6. The energy system as claimed in any preceding claim wherein water cannot flow back down a channel due to the dimension of the reservoir as the outflow conduit for that reservoir, exits the bottom of the reservoir only en-route to the next reservoir.

7. The energy system as claimed in any preceding claim wherein a specific volume of water is entrapped within the hull, such that the entrapped water flows from each reservoir to a neighbouring reservoir in one direction only.

8. The energy system as claimed in claim 7 wherein the volume of entrapped water is a percentage of the total interior volume of the hull and said volume of entrapped water may be modified in order to alter the vessels response to applied wave energy.

9. The energy system of any preceding claim comprising a mooring system suitable for connecting the vessel with an anchor, the mooring system adapted to minimise energy dissipation due to the rolling motion of the vessel in the water.

10. The energy system as claimed in claim 9 wherein the anchor comprises a riser fixed to the ground and optionally fixed to the mooring system through a swivel adapted to swivel in response to the orientation of the vessel relative to the anchor.

11. The energy system as claimed in claim 9 or 10 wherein the mooring system tethers the vessel to the anchor about two fixed, pivot or clevis type attachments located on each end of the hull at or close to the vessels longitudinal axis of rotation.

12. The energy system as claimed in any of claims 9, 10 or 11 wherein the mooring system is adapted to bias the hull of the vessel into an orientation where it is beam-on to the direction of any wind and/or wave and/or optimal orientation.

13. The energy system as claimed in any preceding claim wherein a closed loop valveless system is provided such that the water flows under gravity under wave action to move the vessels centre of mass and thereby rotate/capsize the vessel and thereby provide a torque and rotational velocity input to the drive train and energy capture system.

14. An energy system suitable for converting wave energy of a body of water into movement of a drive train to capture energy comprising:
a vessel, sitting on said body of water, having a hull adapted to roll and/or rotate freely through 360° in response to said wave energy;
a sequence of valveless reservoirs mounted on the outer surface of the hull that are positioned to convert the wave energy acting on the hull to provide a continuous rotation of the hull.

15. A method for converting wave energy of a body of water into movement of a drive train to capture energy comprising:
adapting a vessel, sitting on said body of water, having a hull to rotate freely in response to said wave energy; and
positioning at least one or more endless sequences or loops of ducts and reservoirs designed to convert the reciprocating rolling motion of the hull to a rotational motion thereby driving an energy conversion system to capture energy.
